# EUROPEAN PATENT APPLICATION

(11) **EP 4 382 949 A1**
(43) Date of publication of application: **12.06.2024**
(21) Application number: 23214721.5
(22) Date of filing: 06.12.2023
(51) Int. Cl.: G01S 5/02, H04B 17/20, H04W 24/10, H04W 48/08, H04W 48/10, H04L 47/10, H04W 72/20, H04W 64/00, H04B 17/318, H04L 27/26

(54) **DECODING MESSAGES FOR POSITIONING**

(30) Priority: 08.12.2022 US 202218077818
(71) Applicant: HERE Global B.V., 5611 ZT Eindhoven (NL)
(72) Inventor: WIROLA, Lauri Aarne Johannes, 33100 Tampere (FI); VIITALA, Mika, 33100 Tampere (FI)
(74) Representative: Cohausz & Florack

(57) **Abstract**

Inter-alia, methods are disclosed for decoding an optimized message format utilizable for positioning. The methods may include obtaining at least one encoded sample measurement comprising: at a maximum two full identifier information of respective radio nodes; at a maximum three partial identifier information of respective radio nodes, wherein a part of a respective full identifier information of the respective radio nodes is comprised; and at least one signal strength information of the respective radio nodes; and resolving a respective partial identifier information of the maximum of three partial identifier information of respective radio nodes to determine their respective full identifier information. Corresponding apparatus(es), computer program(s) and system(s) are disclosed.

## Description

### FIELD

The following disclosure relates to the field of positioning, or more particularly relates to systems, apparatuses, and methods for decoding an optimized message format utilizable for (e.g. Wi-Fi) positioning of electronic devices, such as Internet-of-Things (IoT) devices.

### BACKGROUND

Low-Power Wide-Area Network (LPWAN) technologies are popular connectivity options especially for some IoT solutions due to low cost and battery consumption. In many cases one of the challenges is limited network bandwidth limiting the amount of data that can be transferred between the respective device(s) and the backend server. In case of network positioning applications, the bandwidth limitations to message sizes can heavily reduce the positioning accuracy and availability, and in some cases can also rule out the use of certain technologies due to lack of crucial piece of data.

A concrete example of an existing implementation is the Sigfox Atlas positioning service as provided as a service by Sigfox, e.g. its message protocol for data communication e.g. allowing a standard positioning message that supports (e.g. only) reporting of two nearby pieces of identifier information (e.g. Medium Access Control (MAC) addresses) without signal strength measurements (e.g. Received Signal Strength (RSS)). This may easily lead to inaccurate positioning result, and in a worst case, fallback to highly inaccurate cellular positioning due to an inability to calculate any position information (e.g. position estimate) based on e.g. an provided Wi-Fi sample. Also, the lack of RSS measurements rules out the possibility of using much more accurate positioning, such as e.g. Wi-Fi and/or indoor positioning methods. The two MAC addresses are encoded in their entirety into a byte array of 6 bytes (respectively octets) each, to give one example of their size.

### SUMMARY OF SOME EXEMPLARY EMBODIMENTS

The inventors realized it might be useful to enable a solution for a case in which a lossy encoding may be used in order to enable including more information in such messages.

According to a first exemplary aspect, a method is disclosed, the method comprising:
- gathering at least one sample measurement comprising at least one of an identifier information or signal strength information of a plurality of radio nodes, wherein one or more signals sent by the respective radio nodes are observable at a location where the apparatus performs the gather of the at least one sample measurement;
- encoding the at least one sample measurement based on the following conditions:
   - allowing the encoded at least one sample measurement (and/or a message to be provided) to comprise at a maximum two full identifier information of the respective radio nodes;
   - allowing the encoded at least one sample measurement (and/or the message to be provided) to comprise at a maximum three partial identifier information, wherein a part of a respective full identifier information of the respective radio nodes is allowed to be comprised; and
   - allowing the encoded at least one sample measurement (and/or the message to be provided) to comprise at least one signal strength information of the respective radio nodes;
- providing the encoded at least one sample measurement (and/or the message).

This method may for instance be performed and/or controlled by an apparatus, for instance an electronic device, e.g. a mobile terminal, mobile device, user equipment (UE), user device, a smartphone, tablet, portable navigation device, IoT (Internet of Things) device, IIoT (Industrial IoT) device, or a combination thereof. Herewith and in the following, this apparatus is also referred to as first apparatus. Alternatively, the method may for instance be performed and/or controlled by a radio node, e.g. Wi-Fi Access point, beacon device, or a combination thereof. For instance, the method may be performed and/or controlled by using at least one processor of the electronic device and/or the radio node. One or more of the aforementioned entities may for instance be comprised (e.g. installed and/or located) in a venue.

According to a second exemplary aspect, a method is disclosed, the method comprising:
- obtaining at least one encoded sample measurement (and/or a message) comprising:
   - at a maximum two full identifier information of respective radio nodes;
   - at a maximum three partial identifier information of respective radio nodes, wherein a part of a respective full identifier information of the respective radio nodes is comprised; and
   - at least one signal strength information of the respective radio nodes; and
- resolving a respective partial identifier information of the maximum of three partial identifier information of respective radio nodes (e.g. as comprised by the at least one sample measurement and/or the message) to determine their respective full identifier information.

This method may for instance be performed and/or controlled by an apparatus, for instance a server. Herewith and in the following, this apparatus is also referred to as second apparatus. Alternatively, this method may be performed and/or controlled by more than one apparatus, for instance a server cloud comprising at least two servers. For instance, the method may be performed and/or controlled by using at least one processor of the server or server cloud. The second apparatus may for instance be represented by a server cloud. The server, or the server cloud may for instance be configured to provide one or more radio maps, and/or indoor positioning and/or floor detection services (e.g. in the venue).

The method of the first exemplary aspect and/or of the second exemplary aspect may allow to use a lossy encoding in order to enable e.g. including more pieces of identifier information (e.g. MAC addresses or MACs) with one or more pieces of received signal strength information (e.g. RSS Indicator (RSSI) measurements) to such positioning messages transmitted over low bandwidth radio protocols, e.g. Sigfox protocol. Sigfox refers to a (e.g. low bandwidth) message protocol. Sigfox provides a network positioning service under the name Sigfox Atlas. Sigfox is an example of a LPWAN. The format of a LPWAN is useful for Sigfox in particular since, as other LPWAN standards provide for significantly larger messages than Sigfox that would encompass "full-resolution" radio scans comfortably. However, Sigfox has respectively enables very low power requirement respective very low power consumption, a long range and indoor capabilities compared to such other LPWANs. Although encompassing "full-resolution" radio scans may not be possible with Sigfox, in mobile communication use cases, in particular in IoT mobile communication, the afore mentioned benefits make Sigfox a well-suited choice.

According to a further exemplary aspect, a computer program is disclosed, the computer program when executed by a processor causing an apparatus, for instance a server, to perform and/or control the actions of the method according to the first and/or second exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect, an apparatus is disclosed, configured to perform and/or control or comprising respective means for performing and/or controlling the method according to the first and/or second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect, an apparatus is disclosed, comprising at least one processor and at least one memory including computer program code, the at least one memory and the computer program code configured to, with the at least one processor, cause an apparatus, for instance the apparatus, at least to perform and/or to control the method according to the first and/or second exemplary aspect.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise only the disclosed components, for instance means, processor, memory, or may further comprise one or more additional components.

According to a further exemplary aspect, a system is disclosed, comprising:
at least one apparatus according to the first exemplary aspect as disclosed above, and at least one apparatus according to the second exemplary aspect as disclosed above.

Any disclosure herein relating to any exemplary aspect is to be understood to be equally disclosed with respect to any subject-matter according to the respective exemplary aspect, e.g. relating to an apparatus, a method, a computer program, and a computer-readable medium. Thus, for instance, the disclosure of a method step shall also be considered as a disclosure of means for performing and/or configured to perform the respective method step. Likewise, the disclosure of means for performing and/or configured to perform a method step shall also be considered as a disclosure of the method step itself. The same holds for any passage describing at least one processor; and at least one memory including computer program code; the at least one memory and the computer program code configured to, with the at least one processor, cause an apparatus at least to perform a step.

In the following, exemplary features and exemplary embodiments of all aspects will be described in further detail.

The first apparatus may for instance be an IoT device, as disclosed above. Such an IoT device may for instance comprise or be connectable to a transmitter, e.g. according to wireless local area network (WLAN), to Bluetooth (BT) or to Bluetooth Low Energy (BLE) or LPWAN communication standard. Such an IoT device may for instance observe (e.g. obtain) and/or provide (e.g. transmit) (e.g. standard) signals in order to be aware of and/or advertise their presence. Such an IoT device may for instance be of low capability (also referred to as low-capability device), e.g. not comprising or being connectable to a user input device (e.g. keypad, touchpad, or the like to name but a few non-limiting examples), and/or a display, e.g. for displaying information, e.g. to a user.

The first apparatus may for instance be portable (e.g. weigh less than 5, 4, 3, 2, or 1 kg). The first apparatus may for instance comprise or be connectable a display for displaying a route that is guided/navigated to a user. The first apparatus may for instance comprise or be connectable to means for outputting sound, e.g. in form of spoken commands or information. The first apparatus may for instance comprise or be connectable to one or more sensor for determining the devices position, such as for instance a Global Navigation Satellite System (GNSS) receiver, e.g. in the form of a Global Positioning System (GPS) receiver. The first apparatus may for instance comprise or be connectable to one or more sensors, e.g. in the form of an accelerometer and/or a gyroscope for obtaining information. The first apparatus may for instance comprise or be connectable a receiver and/or a transmitter (e.g. a transceiver) for receiving and/or sending information, e.g. broadcasted by a radio node (e.g. Wi-Fi access point). For instance, a (e.g. simple) Wi-Fi signal detector/scanner without transmission capabilities would also suffice for gathering the at least one sample measurement (e.g. by picking up Wi-Fi MAC addresses (e.g. represented by respective one or more pieces of identifier information) and additionally or alternatively RSS readings (e.g. represented by one or more pieces received signal strength information), and which is connectable to the first apparatus. Based on the obtained information, the at least one position of the first apparatus (e.g. from that apparatus the broadcast information is obtained (e.g. received)) can be determined. The first apparatus may for instance be suitable for outdoor and/or for indoor navigation respectively positioning.

The one or more radio nodes may for instance be comprised by a venue, e.g. by an infrastructure of the venue (e.g. a building). Such a radio node may for instance be used for indoor positioning and/or floor detection, e.g. according to BT- (Bluetooth), BLE-(Bluetooth Low Energy) , or may for instance be a Wi-Fi Access Point for indoor positioning and/or floor detection, e.g. according to the WLAN (Wireless Local Area Network) specification. Such a radio node may be according to Sigfox standard. It is mentioned that since cells in which one or more signals of such (a) radio node(s) according to Sigfox standard are observable may be quite large (e.g. covering an area in the order of tens of kilometers), positioning accuracy may be limited. In some cases, the one or more radio nodes may advertise in this way availability to electronic devices (e.g. one or more first apparatuses) seeking a connection, e.g. via broadcasting signals. The signals may convey such information in the form of packets of pre-defined format, and additionally or alternatively such information may include at least an identifier information of the respective radio node. The respective radio node may be visible to any IoT device (e.g. first apparatus) with suitable radio interface, regardless of whether or not they are known to the IoT device.

Such a radio node of the one or more radio nodes, e.g. of the venue, may for instance comprise or be connectable to a transceiver, e.g. according to the BT-, BLE, Sigfox and/or WLAN-specification to provide wireless-based communication. A respective radio node of the one or more radio nodes, e.g. of the venue, may for instance use such a transceiver for transmitting and/or broadcasting one or more signals, e.g. comprising one or more information.

For instance, the first apparatus may gather at least one sample measurement based on one or more signals sent by one or more radio nodes according to Wi-FiBTBLE communication standard, and then may provide (e.g. transmit) the respective encoded at least one sample measurement via the Sigfox communication standard. If the first apparatus (e.g. a tracker) may have multiple (e.g. at least two) data connection options (e.g. can transmit and/or receive one or more signals via different communication standards), then the first apparatus may choose what communication standard to use, e.g. depending upon data transfer needs, power consumption constraints, or the like, to name but a few non-liming examples.

Alternatively or additionally, the first apparatus - when gathering the at least one sample measurement - may also gather (e.g. observe and/or measure) one or more Global Navigation Satellite Signal (GNSS) signals. If such a position based on GNSS is available on part of the first device, this position may be provided (e.g. transmitted), e.g. also via Sigfox communication standard, e.g. to the second apparatus. For instance, a respective message to be provided via Sigfox communication standard may be able to carry 12 bytes, which is sufficient to carry a respective position (e.g. latitude/longitude coordinates) of a GNSS position.

The venue may for instance be a building, shopping mall, office complex, public accessible location (e.g. station, airport, university or the like), to name but a few non-limiting examples.

The one or more signals may for instance be observable by the first apparatus. By gathering (e.g. measuring) at least one of identifier information or received signal strength information based on the signals as provided by the one or more radio nodes, the first apparatus gathers (e.g. measures) the at least one sample measurement. Alternatively or additionally, the at least sample measurement is gathered, e.g. by obtaining an identifier information of at least one respective radio node device that transmitted the respective one or more signals, and optionally gathering (e.g. measuring) the received signal strength (e.g. as a value, e.g. RSS or RSSI value) of the signal, e.g. as a respective received signal strength information.

A respective identifier information may for instance enable one of the one or more radio nodes to be identified. The one or more pieces of identifier information of the one or more radio nodes may for instance be determined, e.g. by receiving the one or more pieces of identifier information from the one or more radio nodes. Additionally or alternatively, the one or more pieces of identifier information of the one or more radio nodes may for instance be determined by extracting the one or more pieces of identifier information out of the received one or more signals of the one or more radio nodes, e.g. including at least one of the one or more pieces of identifier information of the respective radio node of the one or more radio nodes. A respective identifier information may for instance be a Medium Access Control (MAC) address of a respective radio node.

A respective signal strength information may comprise or be represented by a respective RSS value. Such RSS values may for instance be gathered by measuring the one or more signal strength values based on sent signals of the one or more radio nodes. Such a respective signal strength information may for instance represent the power of a received radio signal (e.g. as observable at a location of the first apparatus), wherein such a radio signal may for instance be sent (e.g. periodically) from a respective radio node of the one or more radio nodes. An example of a received signal strength parameter, as comprisable by a respective signal strength information, is a RSS) or a representation of a physical receiving power level value (e.g. a Rx power level value), e.g. in dBm. A respective signal strength information may for instance represent a signal strength measurement of the observable signal strength at the location of the measurement.

The at least one sample measurement may comprise at least one of a respective identifier information or a respective signal strength information. The at least one sample measurement may comprise both (a respective identifier information and a respective signal strength information) of one or more radio nodes as observable at a respective location at which the first apparatus gathers the at least one sample measurement. For instance, the at least one sample measurement may comprise at least one of a respective identifier information or a respective signal strength information of a plurality (e.g. at least two) of radio nodes. For instance, the gathered at least one sample measurement may comprise five, six, seven, eight, nine, ten or more, pieces of identifier information, and optionally pieces of received signal strength information of a corresponding number of radio nodes, e.g. five pieces of identifier information and optionally five pieces of received signal strength information in case signals of five different radio nodes are gathered.

In order to reduce a size of a message, e.g. with which the at least one sample measurement may be provided (e.g. to another entity, e.g. to the second apparatus), the at least one sample measurement and/or a respective message to be provided in addition or in the alternative to providing the at least one sample measurement, may be encoded based on one or more of the following conditions:
- allowing the encoded at least one sample measurement (and/or the respective message) to comprise at a maximum two full identifier information (e.g. the respective identifier information of a respective radio node represented by six octets/bytes) of the respective radio nodes;
- allowing the encoded at least one sample measurement (and/or the respective message) to comprise at a maximum three partial identifier information, wherein a part of a respective full identifier information (and thus, not the full identifier information represented by six octets/bytes) of the respective radio nodes is allowed to be comprised; and
- allowing the encoded at least one sample measurement (and/or the respective message) to comprise at least one signal strength (e.g. and optionally, at a maximum all e.g. five gathered, or all eight or more pieces received signal strength information in case the encoded sample measurement is to be split (e.g. more details are disclosed in the following) into two or more (e.g. discreet) messages) of the respective radio nodes.

This may allow to reduce the size of the at least one sample measurement and/or of the message, in particular since some of the gathered pieces of identifier information are not fully comprised, but e.g. only a last octet of the respective identifier information. For this, the term "partial identifier information" is used.

The terms "identifier information" and "full identifier information" are herewith used as synonyms.

The encoded at least one sample measurement (and/or the respective message) is provided, e.g. by sending or transmitting the at least one encoded sample measurement. The at least one encoded sample measurement may be provided e.g. to an entity that is different from the first apparatus, e.g. to the second apparatus, to name but one non-limiting example. Additionally or alternatively, the at least one encoded sample measurement may be provided to a respective radio node of the plurality or one or more radio nodes, which may then forward the at least one encoded sample measurement to the second apparatus, to name but one further and non-limiting example.

According to an exemplary embodiment of all exemplary aspects, a respective full identifier information is represented by six octets, and a respective partial identifier information is represented by one octet, and is a part of the respective full identifier information, e.g. a last octet of the respective gathered identifier information.

A respective partial identifier information may be represented by at least a first, second, third, fourth, fifth, or sixth (e.g. last) octet/byte of the respective (full) identifier information, or a combination thereof. For instance, a respective full identifier information of a respective radio node may be a certain MAC address consisting of six bytes. Then, a respective partial identifier information of this full identifier information may be represented by the last byte of the six bytes of the full identifier information (e.g. only).

According to an exemplary embodiment of all exemplary aspects, the at least one signal strength information of the encoded at least one sample measurement is represented by four bits (e.g. half a byte, respectively half an octet).

To be able that a respective signal strength information of the encoded at least one sample measurement can be represented by four bits, and not more than four bits, the respective signal strength information may be encoded.

A respective signal strength information may be gathered (e.g. measured) as a value of a logarithmic scale. To encode such values, the gathered signal strength information may be encoded (e.g. converted or compressed) into e.g. a linear value. A respective linear value may be based on a respective signal strength information that is encoded (e.g. converted or compressed).

This may allow a lossy encoding of the at least one sample measurement. This may allow that the encoded at least one sample measurement may comprise (e.g. include) more than one identifier information (e.g. MAC addresses), optionally with more than one signal strength information (e.g. RSSI measurements), e.g. to positioning messages transmitted over low bandwidth radio protocols.

For instance, two or more pieces of identifier information and optionally, two or more pieces of received signal strength information may be comprised by a gathered sample measurement. The respective sample measurement may (e.g. then) be encoded so that the encoded sample measurement comprises two pieces of full identifier information (e.g. respective MAC addresses, six octets/bytes each). Further, the sample measurement may be encoded to comprise (e.g. only) a last octet byte of additional (e.g. all) identifier information of the gathered sample measurement, e.g. as respective partial identifier information.

With regards to the respective partial identifier information of the encoded sample measurement, e.g. the second apparatus that is provided with the encoded sample measurement may (e.g. then) be responsible for resolving the full identifier information based on the e.g. last octet/byte as represented by a respective partial identifier information of the encoded sample measurement. The encoded sample measurement may comprise two pieces of full identifier information and a remaining number of pieces of partial identifier information from (e.g. all) identifier information (e.g. MAC addresses) of the plurality of radio nodes e.g. in the close (thus, where respective signals are observable) proximity of the radio nodes identified with the two pieces of full identifier information.

Optionally, the sample measurement may be encoded to comprise such lossy encoded one or more pieces of signal strength information.

As a general note, effectively the usable range for received signal strength information (e.g. RSS value) in e.g. indoor positioning use case(s) is from -40 dBm to -80 dBm. Since the received signal strength value (as measureable by the first apparatus) decreases on logarithmic scale when the distance to the radio emitter (e.g. transmitter of a respective radio node) increases, received signal strength values larger than -40 dBm may normally not be measured while received signal strength values smaller than -80 dBm may not be (e.g. that) relevant for improving positioning accuracy. Thus, 1) the measurements may be limited to a/the given range from -40 dBm to -80 dBm, and 2) received signal strength values may be emphasized in a high range (i.e. maintain higher resolution for large(r) received signal strength values than the small received signal strength values). This may allow to encode the received signal strength information (e.g. as comprised by the gathered (e.g. measured) sample measurement) in sufficient accuracy e.g. into four bits (half byte). Such a half byte allows to store 16 unique (e.g. linear) signal strength values.

According to an exemplary embodiment of all exemplary aspects, the at least one signal strength information of the at least one encoded sample measurement is converted into a linear value, wherein the conversion is based on at least one of pre-defined signal strength values or pre-defined signal strength ranges of the gathered (e.g. measured) signal strength information mapped to the respective linear values (e.g. as comprised by a look-up table).

Such a linear value representing a gathered (e.g. measured) signal strength information may be a value between 1 to 40. These values may correspond to a pre-defined integer value since these values between 1 to 40 dBm are of low relevance, as disclosed above. The received signal strength values above 40 dBm may correspond to pre-defined, more quantized integer values. Finally, all measured received signal strength values >= 80 dBm may be encoded into a certain pre-defined value since again, these values are not of high relevance. The assumed linear value may be converted to another logarithmic scale e.g. by applying general logarithmic function: f(n) = k log n + c, where k and c are constants used to limit the range to 0-15 [c=0, k = 16 log(40)].

For instance, the converted received signal strength values to the logarithmic scale may be encoded into (e.g. expanded to) a full range of integer values 0 to 15, as shown in the table 1 below:

**Table 1**

| dBm (negative) | conv | Binary |
|---|---|---|
| 1-40 | 0 | 0000 |
| 41 | 1 | 0001 |
| 42 | 2 | 0010 |
| 43 | 3 | 0011 |
| 44 | 4 | 0100 |
| 45 | 5 | 0101 |
| 46 | 6 | 0110 |
| 47 | 7 | 0111 |
| 48 | 8 | 1000 |
| 49-50 | 9 | 1001 |
| 51-53 | 10 | 1010 |
| 54-56 | 11 | 1011 |
| 57-61 | 12 | 1100 |
| 62-67 | 13 | 1101 |
| 68-75 | 14 | 1110 |
| 76- | 15 | 1111 |

This may allow to lossy encode the received signal strength information into four bit values to be comprised by the at least one encoded sample measurement.

According to an exemplary embodiment of all exemplary aspects, the (e.g. encoded) at least one sample measurement is allowed to comprise up to five converted (e.g. see table above) signal strength information.

This may allow to compress the identifier information (e.g. MAC addresses) and/or the received signal strength information (e.g. RSS measurements) of multiple (e.g. a plurality of) radio nodes (e.g. Wi-Fi access points) to sufficiently small size to enable their transmission over limited bandwidth (e.g. via Sigfox communication protocol) while still maintaining ability to use advanced positioning methods to resolve more accurate positions e.g. in the backend server (e.g. the second apparatus). When compared e.g. to the standard Sigfox Atlas protocol without such lossy encoding, the method according to the first exemplary aspect may enable to include e.g. three additional pieces of identifier information (e.g. MAC addresses) and received signal strength information (e.g. RSS values respectively measurements) of all five radio nodes (e.g. Wi-Fi access points), e.g. by increasing the size of the payload data of a respective message with which the encoded at least one sample measurement is provided by (e.g. only) six bytes.

According to an exemplary embodiment of all exemplary aspects, the (e.g. provided and encoded) at least one sample measurement is provided (or obtained) in a single message (e.g. which size may be limited to e.g. 18 bytes or more bytes, to name but one non-limiting example). For instance, in case a respective message can carry 18 bytes or more, the e.g. encoded at least one sample measurement may be provided in a single message. In case a respective message can carry less than 18 bytes, it may be beneficial to split the e.g. encoded at least one sample measurement into two or more respective (e.g. discreet) messages, e.g. and provide both messages (e.g. separately).

As disclosed above, in case the encoded at least one sample measurement is provided via a single message, e.g. up to five pieces of identifier information and/or up to five pieces of received signal strength information can be provided. Thus, the at least one encoded sample measurement may (e.g. only) comprise one full identifier information, which may be carried by a single message having a limited size of e.g. 12 bytes (e.g. for carrying such payload).

According to an exemplary embodiment of all exemplary aspects, the (e.g. encoded) at least one sample measurement is provided (or obtained) as two or more discreet messages. For instance, the two or more discreet messages may be provided (e.g. transmitted or sent) via the Sigfox communication standard for data communication, to name but one non-limiting example.

In case the encoded at least one sample measurement is provided via two or more discreet messages, e.g. up to six, seven, eight, nine, ten or more pieces of identifier information and/or up to six, seven, eight, nine, ten or more pieces of received signal strength information in case of the at least one sample measurement being encoded into at least two (thus, two or more than two) discreet messages. ,

According to an exemplary embodiment of all exemplary aspects, a first discreet message of the two discreet messages comprises one of the maximum of two full identifier information of the respective radio nodes, is allowed to comprise at a maximum the three partial identifier information and is allowed to comprise the respective signal strength information of the respective radio nodes whose identifier information, or a part of it, is comprised by the first discreet message.

According to an exemplary embodiment of all exemplary aspects, a second discreet message of the two discreet messages comprises another one of the maximum of two full identifier information of the respective radio nodes, is allowed to comprise at a maximum three further pieces of partial identifier information not comprised by the first discreet message, and is allowed to comprise the respective signal strength information of the respective radio nodes whose identifier information, or a part of it, is comprised by the second discreet message.

It is noted that the terms "first discreet message" and "second discreet message" do not specify the order in which the first discreet message and the second discreet message may be provided by the first apparatus (respectively be received e.g. by the second apparatus). This may be handled e.g. by the protocol used for transmitting the first discreet message and the second discreet message. However, the respective bytes of the first discreet message and the second discreet message must be received or
- after receiving - be brought in/into the correct order so that the respective messages respective their content (e.g. payload, e.g. the encoded at least one sample measurement) can be interpreted the correctly. The first discreet message may be provided first, and the second discreet message may be provided afterwards, or vice versa. The first discreet message and the second discreet message may be interchangeable in this regard. However, it may be more reasonable that the respective discreet message that is received after another discreet message may point (e.g. via a comprised Cyclic Redundancy Check (CRC) checksum) to the first received discreet message, i.e. the second discreet message e.g. including a CRC8 checksum e.g. pointing to the first discreet message. It may also be the other way around, thus, the first discreet message points (e.g. via a comprised CRC checksum) to the second discreet message, e.g. since a last octet of the total size of a respective first discreet message may be available for comprising such a CRC checksum. In principle, the at least one (e.g. encoded) sample measurement may be split to more than two messages, e.g. if there is a need to report even more than e.g. eight pieces of identifier information and/or eight pieces of received signal strength information (e.g. eight Wi-Fi samples). Indicating intent to provide (e.g. send) additional messages may be beneficial, since e.g. the backend service (e.g. as provided/hosted by the second apparatus) that may combine the respective messages may need to know if it's necessary to wait for subsequent messages, e.g. in order to avoid additional latency in positioning. In case the Wi-Fi scan (e.g. the gathered at least one sample measurement) may include or comprise (e.g. only) two to four radio nodes (e.g. access points), the first apparatus may still provide the encoded at least one sample measurement in/by two messages. This may allow to rotate the full identifier information (e.g. full MACs or MAC addresses) in order to improve the probability of resolving the respective partial identifier information (e.g. partial MACs).

It will be understood that for the case that the (e.g. provided and encoded) at least one sample measurement is provided (or obtained) in a single message, if available, one byte of the single message may be used to signal a number of subsequent messages (0 if the last byte is omitted), if any. For this, e.g. a last byte of such a single message may be used.

According to an exemplary embodiment of all exemplary aspects, the second discreet message is allowed to comprise a checksum (e.g. a CRC8 checksum, e.g. represented by one byte) of the first discreet message.

According to an exemplary embodiment of all exemplary aspects, the first discreet message is allowed to comprise a checksum (e.g. a CRC8 checksum, e.g. represented by 1 byte) of the second discreet message.

For instance, joining respectively combining the first discreet message and the second discreet message may be enabled based on the first discreet message or the second discreet message having the respective CRC8 code. The respective checksum (e.g. CRC8 code) can be in either message, it just needs to point to the other discreet message.

Thus, it is also considered to be disclosed that the encoded at least one sample measurement provided as more than two discreet messages is enabled based on the same principle, e.g. by the total number of discreet messages minus one comprise a respective checksum so that in total it is pointed to all discreet messages so that combining the discreet messages is enabled. For instance, in case of three discreet messages, the second discreet message and the third discreet message may comprise a respective checksum. The checksum of the third discreet message may point to the second discreet message, and the checksum of the second discreet message may point to the first discreet message.

An implementation at a backend server (e.g. second apparatus) may receive the first discreet message and already know which message to wait for in order to combine them, instead of having to look back on the previously received messages to find the right one, to name but one further non-limiting example.

According to an exemplary embodiment of the first exemplary aspect, the method further comprises:
- obtaining a position information determined based, at least in part, on the provided encoded at least one sample measurement.

The position information may be indicative of a location, e.g. determined (e.g. estimated) based, at least in part, on the provided encoded at least one sample measurement. The position information may e.g. be represented by coordinates, e.g. latitude, longitude, and optionally altitude values, to name but one non-limiting example.

The position information may be obtained, e.g. by receiving the position information from a backend server (e.g. second apparatus).

According to an exemplary embodiment of the first exemplary aspect, the method further comprises:
- providing a position request indicative of a request for determining of the location at which the apparatus gathered the at least one sample measurement.

The position request may be provided, e.g. from the first apparatus to the second apparatus. The position request may be provided prior to the obtaining of the position information, as disclosed above.

The second apparatus may obtain the encoded at least one sample measurement. In case the second apparatus obtains (e.g. receives) the encoded at least one sample measurement as two discreet messages, even the first discreet message alone could be sufficient for positioning purposes, thus, determining the position information (e.g. by the second apparatus), e.g. although there is a higher risk of positioning failing due to the full identifier information (e.g. MAC addresses of certain radio nodes) being unavailable in a radio model database. The second apparatus may be able to still resolve if e.g. a previous position of the first apparatus was known. For instance, if a respective full identifier information may not be found e.g. in a/the database, the second apparatus may still search respective radio model(s) based on the partial identifier information. This may result in lots of hits. The second apparatus may examine these radio model locations e.g. to find a cluster, but this might still be inconclusive. Now, if the second apparatus knows/has a sufficiently fresh (e.g. not older than e.g. 1, 2 3, 4, 5, 10 min or more) last-known-location of the first apparatus may benefit to determine (e.g. identify) correct model(s) based on just the respective partial identifier information.

According to an exemplary embodiment of the first exemplary aspect, the method further comprises:
- obtaining a configuration indicative of a number of messages into which the at least one sample measurement is encoded, wherein the configuration is determined based on an allowed number of messages in a given timeframe (e.g. on a per day basis, e.g. Sigfox may be limited to approximately 140 messages per day, to name but one non-limiting example),
   wherein the at least one sample measurement is further encoded based on the configuration.

Sigfox specification as of now defines that e.g. up to 140 messages per day are transmittable. Thus, this or such a limitation may be taken into account for splitting (e.g. by the first apparatus) and combining (e.g. by the second apparatus) discreet messages with which the encoded at least one sample measurement is transmitted, or even changing modes (e.g. from using a single message, or using two discreet messages to transmit the encoded at least one sample measurement).

The second apparatus obtains at least one encoded sample measurement, e.g. by receiving the at least one encoded sample measurement from the first apparatus that provides the at least one encoded sample measurement. Thus, the at least one encoded sample measurement that is obtained by the second apparatus may be the at least one encoded sample measurement provided by the first apparatus. As disclosed above with regard to the first exemplary aspect, the at least one encoded sample measurement or a respective message to be provided may comprise:
- at a maximum two full identifier information (e.g. represented by six octets/bytes) of respective radio nodes;
- at a maximum three partial identifier information of respective radio nodes, wherein a part (e.g. the last octet) of a respective full identifier information (and not the full identifier information) of the respective radio nodes is comprised; and
- at least one signal strength information (e.g. encoded/converted to applied logarithmic scale) of the respective radio nodes.

This above given example may for instance apply in case the at least one encoded sample measurement or the respective message to be provided may carry up to 12 bytes of payload, to name but one non-limiting example.

Dependent upon the respective size (e.g. amount of data) a respective message may carry, how many pieces of full identifier information (e.g. represented by six octets/bytes) of respective radio nodes; and/or how many pieces of partial identifier information of respective radio nodes, and/or how many pieces of signal strength information may be variable.

The disclosure regarding features and/or embodiments according to the first exemplary aspect is equally be considered to be disclosed for same/equal/similar features and/or embodiments according to the second exemplary aspect.

The respective partial identifier information is resolved. The respective partial identifier information may be resolved in case the obtained at least one encoded sample measurement comprises one or more respective partial identifier information.

According to an exemplary embodiment of the second exemplary aspect, the method further comprises:
- determining a position information based, at least in part, on the obtained at least one encoded sample measurement; and
- providing the position information.

According to an exemplary embodiment of the second exemplary aspect, the method further comprises:
- obtaining (e.g. receive) a position request indicative of a location at which an apparatus (e.g. the first apparatus) gathered the obtained at least one sample measurement to be determined (e.g. estimated).

The position request may for instance be obtained by receiving the request from an entity, e.g. a server or an IoT device (e.g. the first apparatus).

According to an exemplary embodiment of the second exemplary aspect, the method further comprises:
- combining a first discreet message and a second discreet message in case the at least one encoded sample measurement is obtained as two discreet messages instead of one.

The at least one encoded sample measurement may be obtained as a single message. In the alternative, the at least one encoded sample measurement may be obtained as two or more discreet messages. In the latter case, such a first discreet message and a second discreet message may be combined, e.g. by joining the first discreet message and the second discreet message, and optionally additional discreet message(s) in case more than two discreet messages are obtained. The combining may be done based, at least in part, on a checksum (e.g. CRC checksum) information that is comprised by at least one of the two or more discreet messages.

According to an exemplary embodiment of the second exemplary aspect, the first discreet message and the second discreet message are combined based on a checksum comprised by the second discreet message.

According to an exemplary embodiment of the second exemplary aspect, the method further comprises:
- resolving a respective signal strength information represented by a linear value based on at least one of pre-defined signal strength values or pre-defined signal strength ranges mapped to the respective linear values.

The one or more signal strength values may for instance be the same as described above with respect to the one or more signal strength values as used by exemplary embodiments of the method according to the first exemplary aspect of the present invention.

The resolving of a respective signal strength information may be performed and/or controlled, based on a conversion of a four bit (e.g. binary) value as comprised by the obtained at least one encoded sample measurement, into an integer value, and then into a dBm (negative) value. This e.g. two-step conversion may be done as disclosed above showing the table having the columns with the headlines: dBm (negative), conv, Binary.

According to an exemplary embodiment of the second exemplary aspect, the position estimate is determined based on a maximum of five pieces of full identifier information (e.g. a part may be resolved based on partial identifier information) of the respective radio nodes with their corresponding signal strength information (e.g. case in which the at least one encoded sample measurement is obtained as a single (e.g. discreet) message).

According to an exemplary embodiment of the second exemplary aspect, the position estimate is determined based on a maximum of eight pieces of full identifier information (e.g. a part may be resolved based on partial identifier information) of the respective radio nodes with their corresponding signal strength information (e.g. case in which the at least one encoded sample measurement is obtained as a single (e.g. discreet) message).

According to an exemplary embodiment of the second exemplary aspect, the method further comprising:
- determining a configuration indicative of a number of messages into which the at least one sample measurement is encoded, wherein the configuration is determined based on an allowed number of messages in a given timeframe (e.g. on a per day basis, 140 messages Sigfox); and
- providing the configuration (e.g. to a first apparatus, e.g. IoT device).

The first apparatus may obtain (e.g. receive) the configuration from the second apparatus. Then, the first apparatus may apply the configuration, so that when the first apparatus encodes at least one gathered sample measurement, this encoding may be performed and/or controlled based, at least in part, on the configuration. The number of messages into which the at least one sample measurement is encoded may be set by the configuration in such a way that the respective transport protocol (e.g. Sigfox) is able to transmit the encoded sample measurement, e.g. from the first apparatus to the second apparatus.

The features and example embodiments described above may equally pertain to the different aspects.

It is to be understood that the presentation in this section is merely by way of examples and non-limiting.

Other features will become apparent from the following detailed description considered in conjunction with the accompanying drawings. It is to be understood, however, that the drawings are designed solely for purposes of illustration and not as a definition of the limits, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect;
- Fig. 2: a flowchart showing an example embodiment of a method according to the first exemplary aspect;
- Fig. 3: a flowchart showing an example embodiment of a method according to the second exemplary aspect;
- Fig. 4: a schematic block diagram of an apparatus configured to perform the method according to the first exemplary aspect;
- Fig. 5: a schematic block diagram of an apparatus configured to perform the method according to the second exemplary aspect; and
- Fig. 6: examples of storage media.

### DETAILED DESCRIPTION OF SOME EXEMPLARY EMBODIMENTS

The following description serves to deepen the understanding and shall be understood to complement and be read together with the description as provided in the above summary section of this specification.

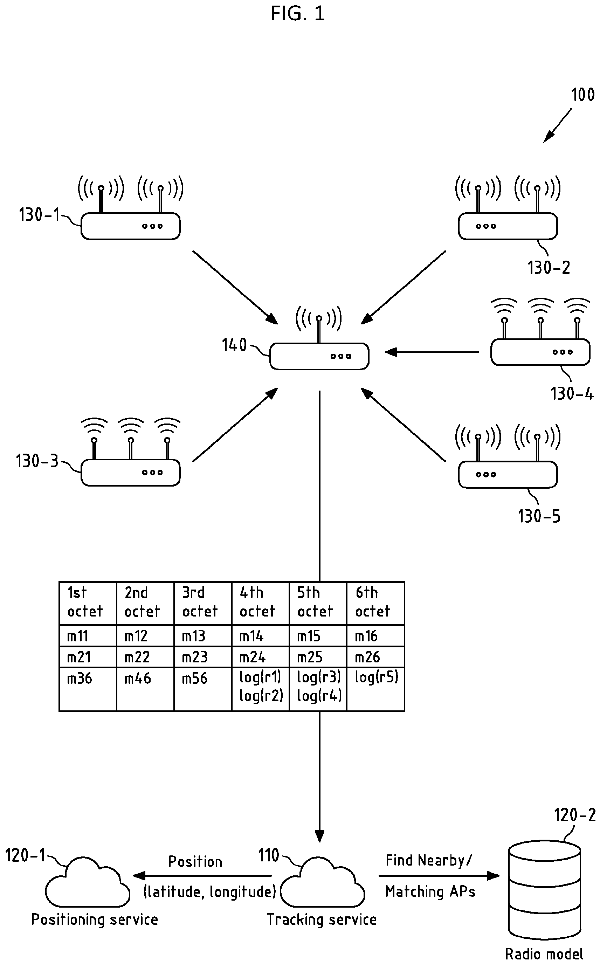

Fig. 1 is a schematic high-level block diagram showing a system 100 according to all exemplary aspects. System 100 comprises a plurality of radio nodes 130-1 to 130-5, an IoT device 140 (e.g. a first apparatus, e.g. configured to perform and/or control a method according to the first exemplary aspect), a server cloud (also referred to as backend server) 110 (e.g. a second apparatus, e.g. configured to perform and/or control a method according to the second exemplary aspect), and an optional positioning service server cloud 120-1, and an optional radio model database 120-2. The optional positioning service server cloud 120-1, and an optional radio model database 120-2 may be comprised by or be connectable to the server cloud 110. Server cloud 110 may be a part of or host a tracking service.

As indicated by the example arrows between the entities of the system 100, communication, e.g. wireless or wired communication between the entities may occur.

Example embodiments of all exemplary aspects may enable one or more of the following: The IoT device 140 may gather (e.g. measure) at least one sample measurement comprising at least one of an identifier information or signal strength information of the plurality of radio nodes 130-1 to 130-5. One or more signals are sent by the respective radio nodes 130-1 to 130-5 are observable at a location where the IoT device 140 performs the gathering (e.g. measuring) of the at least one sample measurement.

Such one or more signals of the respective radio nodes 130-1 to 130-5 may comprise or be indicative of a respective identifier information (e.g. MAC address) of the respective radio node of the plurality of radio nodes 130-1 to 130-5. Additionally or alternatively, such one or more signals of the respective radio nodes 130-1 to 130-5 may comprise or be indicative of a respective received signal strength information (e.g. RSS value or RSSI) of the respective radio node of the plurality of radio nodes 130-1 to 130-5.

For instance, the radio node 130-1 may provide (e.g. sent or transmit) one or more signals comprising or being indicative of the identifier information (e.g. MAC address) "m11:m12:m13:m14:m15:m16", thus, a respective identifier information having six octets or being represented by six bytes. Further, the radio node 130-1 may provide (e.g. sent or transmit) one or more signals comprising or being indicative of the received signal strength information (e.g. RSS value), in Fig. 1 referred to as "r1".

Likewise, radio node 130-2 may provide one or more signals comprising the following:
Identifier information: m21:m22:m23:m24:m25:m26
Received signal strength information: r2

Radio node 130-3 may provide one or more signals comprising the following:
Identifier information: m31:m32:m33:m34:m35:m36
Received signal strength information: r3

Radio node 130-4 may provide one or more signals comprising the following:
Identifier information: m41:m42:m43:m44:m45:m46
Received signal strength information: r4

Radio node 130-5 may provide one or more signals comprising the following:
Identifier information: m51:m52:m53:m54:m55:m56
Received signal strength information: r5

The IoT device 140 - if located in such a location at which (e.g. all) of the one or more signals sent by the respective radio nodes 130-1 to 130-5 are observable, gathers (e.g. measures) a sample measurement comprising the respective identifier information of (e.g. all of) the radio nodes 130-1 to 130-5, and optionally (e.g. all of) the respective received signal strength information.

This gathered at least one sample measurement may be (e.g. lossy) encoded by the IoT device 140 measurement based on the following conditions:
- allowing the encoded at least one sample measurement to comprise at a maximum two full identifier information of the respective radio nodes 130-1 to 130-5;
- allowing the encoded at least one sample measurement to comprise at a maximum three partial identifier information of the respective radio nodes 130-1 to 130-5, wherein a part of a respective full identifier information of the respective radio nodes 130-1 to 130-5 is allowed to be comprised; and
- allowing the encoded at least one sample measurement to comprise at least one signal strength information of the respective radio nodes 130-1 to 130-5.

The gathered at least one sample measurement may be encoded in such a way that the information comprised by the gathered at least one sample measurement can fit in a message, e.g. of 18 bytes.

For instance in case the sample measurement comprises the respective identifier information and the respective received signal strength information as disclosed above, after encoding, the encoded sample measurement may comprise the following information, as illustrated by the table shown in Fig. 1:

**Table 2**

| 1^{st} octet | 2^{nd} octet | 3^{rd} octet | 4^{th} octet | 5^{th} octet | 6^{th} octet |
|---|---|---|---|---|---|
| m11 | m12 | m13 | m14 | m15 | m16 |
| m21 | m22 | m23 | m24 | m25 | m26 |
| m36 | m46 | m56 | log (r1) | log (r3) | log (r5) |
| | | | log (r2) | log (r4) | |

As can be seen, the encoded sample measurement comprises the following information:
- full identifier information of radio node 130-1 (e.g. all 6 octets, equal to 6 bytes);
- full identifier information of radio node 130-2 (e.g. all 6 octets, equal to 6 bytes);
- partial identifier information of radio node 130-3 (e.g. last/sixth octet);
- partial identifier information of radio node 130-4 (e.g. last/sixth octet);
- partial identifier information of radio node 130-5 (e.g. last/sixth octet);
- received signal strength information of radio nodes 130-1 to 130-5 applied to logarithmic scale. The three pieces of partial identifier information and the received signal strength information also may need 6 octets, equal to 6 bytes in a message to be transmitted.

As another example, the gathered at least one sample measurement may be encoded in such a way that the information comprised by the gathered at least one sample measurement can fit in a message, e.g. of 12 bytes. The encoded sample measurement may comprise one full identifier information and three pieces of partial identifier information and e.g. up to four pieces of respective received signal strength information associated with the one full identifier information and the three pieces of partial identifier information. After encoding, the encoded sample measurement may comprise the following information:

**Table 3**

| 1^{st} octet | 2^{nd} octet | 3^{rd} octet | 4^{th} octet | 5^{th} octet | 6^{th} octet |
|---|---|---|---|---|---|
| m11 | m12 | m13 | m14 | m15 | m16 |
| m26 | m36 | m46 | log (r1) | log (r3) | Optional indicator if this is the (e.g. only) message or not |
| | | | log (r2) | log (r4) | |

It is mentioned that the respective encoding of the gathered at least one sample measurement may (e..g also) be applied for future low bandwidth protocols or as a space efficient method even if a respective message with which the at least one encoded sample measurement is to be provided is capable of carrying more than e.g. 18 bytes, such as e.g. LoRa of Long Range Wide Area Network (LoRaWAN). LoRa supports a respective message or respective messages that may carry up to 256 bytes. A single small message carrying the at least one encoded sample measurement may be beneficial e.g. if 238 bytes (in case the at least one encoded sample measurement has 18 bytes in this example) are still available for communicating a more complex observation, (e.g. more than just e.g. a temperature), to name but one non-limiting example.

The respecitve encoded sample measurement is then provided, e.g. to the server cloud 110. Likewise, the server cloud 110 obtains (e.g. receives) the at least one encoded sample measurement comprising:
- at a maximum two full identifier information of respective radio nodes, here of radio nodes 130-1 and 130-2;
- at a maximum three partial identifier information of respective radio nodes, here of radio nodes 130-3 to 130-5, wherein a part of a respective full identifier information of the respective radio nodes is comprised; and
- at least one signal strength information of the respective radio nodes, here received signal strength information of radio nodes 130-1 to 130-5 applied to logarithmic scale.

The server cloud resolves the respective partial identifier information of the maximum of three partial identifier information of respective radio nodes, here of the radio nodes 130-3 to 130-5 to determine their respective full identifier information. For this, the server cloud may provide (e.g. send) a request to the radio model database 120-2, e.g. by the request being a find Nearby/Matching APs request so that the respective partial identifier information can be resolved. Such a request may not (e.g. only) comprise the respective partial identifier information, but also the respective (e.g. two) full identifier information so that a look up for nearby radio nodes being in the vicinity of the respective radio nodes for which the server cloud 110 obtained the respective full identifier information (e.g. since the respective full identifier information enables identification of the respective radio nodes, and the likelihood that then based on the e.g. last octet of a respective identifier information as represented by the respective partial identifier information is enough to identify the correct respective radio node is sufficient (e.g. error being below 1% of (e.g. all of) the requests)).

When the server cloud 110 has resolved the respective partial identifier information, the server cloud 110 may also resolve the respective received signal strength information. More details are disclosed below.

Optionally, the server cloud may provide (e.g. sent) a position request e.g. to the positioning service server cloud 120-1. Prior, the server cloud 110 may have obtained (e.g. received) such a position request from the IoT device 140. The position request may comprise or be accompanied by the respective identifier information (e.g. including the resolved partial identifier information, thus, the respective full identifier information), and optionally the received signal strength information (e.g. including the resolved received signal strength information). The positioning service server cloud 120-1 may determine (e.g. estimate) a position information based on the respective identifier information and/or the received signal strength information and provide (e.g. sent) the determined position information e.g. back to the server cloud 110. The server cloud 110 may provide (e.g. sent, relay or forward) the position information to the IoT device 140.

The following data flow that may be used in case that the encoded sample measurement is provided with a single message may be as follows:
1. IoT device 140 collects (e.g. gathers) (e.g. Wi-Fi) sample(s) (e.g. sample measurement(s)) e.g. by measuring MAC addresses and/or RSSs of e.g. five nearby access points (AP, e.g. radio nodes 130-1 to 130-5)
2. IoT device 140 encodes Wi-Fi sample(s) in a lossy data format and sends it to backend server 110 (e.g. tracking service):
   - 2 MACs (e.g. identifier information) consisting of full 6 octets/bytes => 12 bytes
   - 3 MACs (e.g. identifier information) consisting of only the last octets => 3 bytes

   - RSS values (e.g. received signal strength information) converted to applied logarithmic scale, encoded into 4 bits each => ~3 bytes
3. Backend server 110 resolves the incomplete MACs by searching the radio model for matching APs in the proximity of the two Aps with full MACs
4. Backend server 110 makes positioning request with 5 full MACs with corresponding RSS values

Some IoT communication protocols (e.g. Sigfox) can be constrained to very short message sizes, e.g. 12 or 18 bytes. In an alternative data flow where the payload is larger than 12 or 18 bytes, the respective message may be divided into two or more discreet messages. This data flow may be implemented as follows:
1. IoT device 140 collects (e.g. gathers) (e.g. Wi-Fi) sample(s) (e.g. measurement(s)) e.g. by measuring MAC addresses and/or RSSs of 5 nearby access points (AP, e.g. radio nodes 130-1 to 130-5)
2. IoT device 140 encodes Wi-Fi sample(s) in lossy data format, splits it into two messages, which it (e.g. IoT device 140) sends to backend server 110 (e.g. tracking service):
   - 1st message:
      - 1 MAC (e.g. identifier information) consisting of full 6 octets/bytes => 6 bytes
      - 3 MACS (e.g. identifier information) consisting of only the last octet => 3 bytes
      - RSS values (e.g. received signal strength information) of all 4 MACs (e.g. identifier information) converted to applied logarithmic scale, encoded into 4 bits => 2 bytes => all together 11 bytes

   - 2nd message:
      - 1 MAC (e.g. identifier information) consisting of full 6 octets/bytes => 6 bytes
      - 3 MACS (e.g. identifier information) consisting of only the last octet => 3 bytes
   - RSS values (e.g. received signal strength information) of all 4 MACs (e.g. identifier information) converted to applied logarithmic scale, encoded into 4 bits => 2 bytes
      - CRC8 checksum (e.g. checksum information) of message #1 to enable combining the messages in backend server => 1 byte => all together 12 bytes
3. Backend server combines the messages and resolves the incomplete MACs by searching the radio model for matching Aps in the proximity of the two Aps with full MACs
4. Backend server 110 makes positioning request with 8 full MACs with corresponding RSS values.

Even the first message alone could be sufficient for positioning purposes (e.g. determining a position information), although there is a higher risk of positioning failing due to the full MAC (e.g. identifier information) being unavailable in the radio model (e.g. database 120-2).

**Table 3**

| | | | | | | | | | | | |
|---|---|---|---|---|---|---|---|---|---|---|---|
| Byte 1 | Byte 2 | Byte 3 | Byte 4 | Byte 5 | Byte 6 | Byte 7 | Byte 8 | Byte 9 | Byte 10 | Byte 11 | Byte 12 |
| M1_ 1 | M1_ 2 | M1_ 3 | M1_ 4 | M1_ 5 | M1_ 6 | M2_ 6 | M3_ 6 | M5_ 6 | R1_R 2 | R3_R 4 | |
| M5_ 1 | M5_ 2 | M5_ 3 | M5_ 4 | M5 _ 5 | M5_ 6 | M6_ 6 | M7_ 6 | M8_ 6 | R5_R 6 | R7_R 8 | CRC8 #1 |

RSS value (e.g. received signal strength information) conversion to applied logarithmic scale may be performed and/or controlled by example embodiments of all exemplary aspects as follows:
RSS values (e.g. received signal strength information) are already measured using logarithmic scale. To compress the RSS values even further, they could be assumed to linear values between 1 to 40, wherein 1 corresponds to values 1 to 40 dBm and 40 corresponds to values >= 80 dBm. The assumed linear value is further converted to another logarithmic scale by applying general logarithmic function: f(n) = k log n + c, where k and c are constants used to limit the range to 0-15 [c=0, k = 16 log(40)]. An example of such a mapping is shown in Table 1 in the summary section of this specification

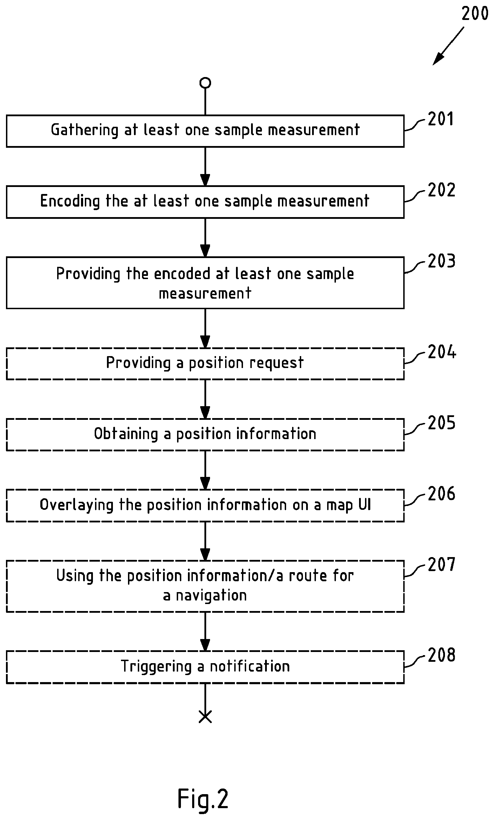

Fig. 2 is a flowchart 200 showing an example embodiment of a method according to the first exemplary aspect. This flowchart 200 may for instance be performed by an IoT device (e.g. first apparatus), e.g. IoT device 140 of Fig. 1.

In a first step 201, at least one sample measurement is gathered. The at least one sample measurement is gathered (e.g. measured) based on one or more signals sent (e.g. emitted) by a plurality of radio nodes, e.g. the radio nodes 130-1 to 130-5 of Fig. 1.

In a second step 202, the at least one sample measurement is encoded. The at least one sample measurement based on certain one or more conditions, as disclosed above in the summary section. This may allow to reduce a size of the encoded at least one sample measurement enhancing the providing (e.g. transmission) of a message comprising the at least one sample measurement.

In a third step 203, the encoded at least one sample measurement is provided, e.g. by sending the encoded at least one sample measurement. The encoded at least one sample measurement may be provided to a server cloud (e.g. second apparatus), e.g. server cloud 110 of Fig. 1. The encoded at least one sample measurement may be provided to an entity that is different from the server cloud, e.g. to another entity of a communication network (e.g. not shown in Fig. 1), which may then forward respectively relay the encoded at least one sample measurement to the server cloud.

In an optional fourth step 204, a position request is provided, e.g. by sending the position request to a server cloud (e.g. second apparatus). The server cloud may be the same to which in step 203 the encoded at least one sample measurement is provided. With the position request, the apparatus performing and/or controlling the flowchart 200 may request its location respectively the location at which the apparatus has gathered the at least one sample measurement in step 201 to be determined (e.g. estimated).

In an optional fifth step 205, a position information is obtained, e.g. from an entity to which in optional step 204 the position request was provided (e.g. sent). The position information may be indicative of a location at which the apparatus performing and/or controlling the flowchart 200 has gathered the at least one sample measurement (see step 201).

In an optional sixth step 206, the position information (e.g. of step 205) is overlayed on a map user interface (UI).

In an optional seventh step 207, the position information is used for a navigation, e.g. for navigating a user of the apparatus performing and/or controlling the flowchart 200 (e.g. tracker 140 of Fig. 1) along a route, e.g. to a destination (which may be input), and/or from a location to a location as represented by the position information, to name but a few non-limiting examples.

In an optional eighth step 208, a notification may be triggered, e.g. that the apparatus performing and/or controlling the flowchart 200 (e.g. tracker 140 of Fig. 1) has arrived to a certain location X, is on the move, cannot be found, calculating a route to the apparatus' performing and/or controlling the flowchart 200 (e.g. tracker 140 of Fig. 1) location, to name but a few non-limiting examples.

It will be understood that in particular any of the steps 206 to 208 may be performed and/or controlled prior to, in parallel to, and/or subsequent to any of the steps 201 to 205.

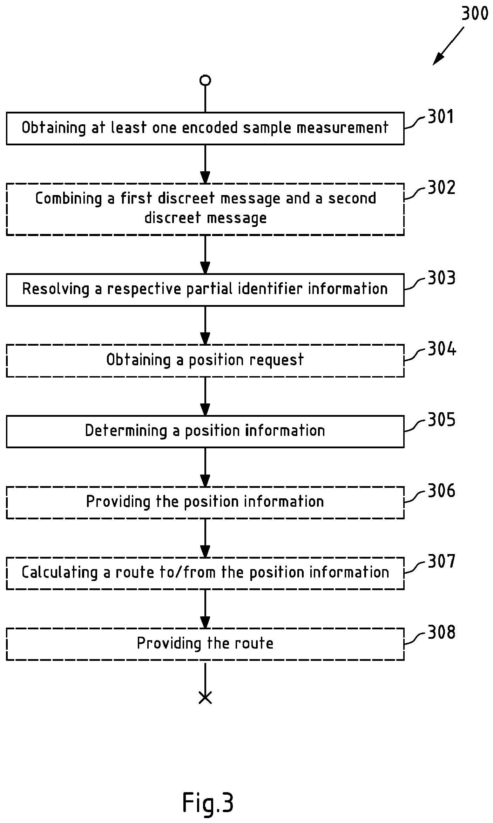

Fig. 3 is a flowchart 300 showing an example embodiment of a method according to the second exemplary aspect. This flowchart 300 may for instance be performed by a server cloud (e.g. second apparatus), e.g. server cloud 110 of Fig. 1.

In a first step 301, at least one encoded sample measurement is obtained. The at least one encoded sample measurement is obtained by receiving the at least one encoded sample measurement e.g. from an IoT device (e.g. first apparatus), e.g. IoT device 140, which may represent the apparatus performing and/or controlling the flowchart 200 of Fig. 2.

In an optional second step 302, the at least one encoded sample measurement is combined, e.g. in case the at least one encoded sample measurement is obtained in step 301 as two or more discreet messages. For this, and as one example, e.g. a checksum information as comprised by a first discreet message or a second discreet message forming the at least one encoded sample measurement obtained in step 301 may point (e.g. via a checksum information) to the respective discreet message with which the respective discreet message comprising the checksum information is to be combined (e.g. joined).

In a third step 303, a respective partial identifier information of the maximum of three pieces of partial identifier information of respective radio nodes and as comprised by the at least one encoded sample measurement of step 301 is resolved. This may allow to determine or obtain the respective full identifier information instead of the partial identifier information. For this, the apparatus performing and/or controlling the flowchart 300 may retrieve further information (e.g. a look-up table having a structure as disclosed in the summary section) from a memory, e.g. a database comprised by or connectable to said apparatus.

In an optional fourth step 304, a position request is obtained, e.g. by receiving such a position request. The position request may be obtained from the apparatus performing and/or controlling the flowchart 200 of Fig. 2. The apparatus performing and/or controlling the flowchart 200 of Fig. 2 may request its location respectively the location at which this apparatus has gathered at least one sample measurement (see step 201 of Fig. 2) to be determined (e.g. estimated).

In a fifth step 305, a position information is determined. The position information may be determined in response to obtaining a position request (see step 304). The position information may be determined based, at least in part, on the at least one encoded sample measurement, or more precisely, based on the one or more pieces of full and/or partial identifier information, and/or the one or more pieces of received signal strength information as comprised by the at least one encoded sample measurement.

In an optional sixth step 306, the position information is provided, e.g. by sending the position information (e.g. as determined in step 305), e.g. to the entity form which in step 304 the position request may have been obtained, e.g. the apparatus performing and/or controlling the flowchart 200 of Fig. 2.

In an optional seventh step 307, a route e.g. to or from a location as represented by the position information is determined (e.g. calculated).

In an optional eighth step 308, the route (e.g. of step 307) may be provided, e.g. by transmitting the route e.g. to an apparatus performing and/or controlling the flowchart 200 of Fig. 2.

It will be understood that in particular any of the steps 307 to 308 may be performed and/or controlled prior to, in parallel to, and/or subsequent to any of the steps 301 to 306.

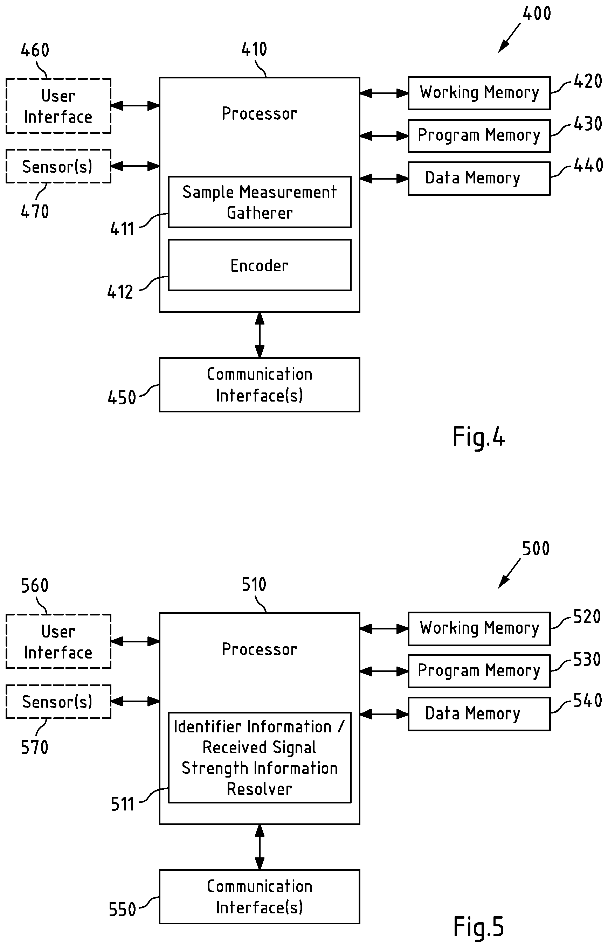

Fig. 4 is a schematic block diagram of an apparatus 400 according to an exemplary aspect, which may for instance represent the IoT device 140 of Fig. 1.

Apparatus 400 comprises a processor 410, working memory 420, program memory 430, data memory 440, communication interface(s) 450, an optional user interface 460 and an optional sensor(s) 470.

Apparatus 400 may for instance be configured to perform and/or control or comprise respective means (at least one of 410 to 470) for performing and/or controlling the method according to the first exemplary aspect. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to first exemplary aspect.

Processor 410 may for instance comprise a sample measurement gatherer 411 as a functional and/or structural unit. Sample measurement gatherer 411 may for instance gather (e.g. measure) one or more pieces of identifier information and/or one or more pieces of received signal strength information, e.g. based on one or more signals emitted by radio nodes, e.g. radio nodes 130-1 to 130-5 f Fig. 1.

Processor 410 may for instance comprise an encoder 412 as a functional and/or structural unit. Encoder 412 may for instance encode a gathered sample measurement.

Processor 410 may for instance further control the memories 420 to 440, the communication interface(s) 450, the optional user interface 460 and the optional sensor(s) 470.

Processor 410 may for instance execute computer program code stored in program memory 430, which may for instance represent a computer readable storage medium comprising program code that, when executed by processor 410, causes the processor 410 to perform the method according to the first exemplary aspect.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more pieces of sample measurements, one or more pieces of identifier information, one or more pieces of partial identifier information, one or more pieces of received signal strength information, one or more pieces of encoded sample measurements, one or more messages, one or more discreet messages, one or more position requests, one or more pieces of position information, or a combination thereof.

Communication interface(s) 450 enable apparatus 400 to communicate with other entities, e.g. with server cloud 110 of Fig. 1. The communication interface(s) 450 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 400 to communicate with other entities, for instance with one or more of the radio nodes 130-1 to 130-5 of Fig. 1.

User interface 460 is optional and may comprise a display for displaying information to a user and/or an input device (e.g. a keyboard, keypad, touchpad, mouse, etc.) for receiving information from a user.

Sensor(s) 470 are optional and may for instance comprise a barometric sensor, e.g. to gather pressure information.

Some or all of the components of the apparatus 400 may for instance be connected via a bus. Some or all of the components of the apparatus 400 may for instance be combined into one or more modules.

Fig. 5 is a schematic block diagram of an apparatus 500 according to an exemplary aspect, which may for instance represent the server cloud 110 of Fig. 1.

Apparatus 500 comprises a processor 510, working memory 520, program memory 530, data memory 540, communication interface(s) 550, and an optional user interface 560.

Apparatus 500 may for instance be configured to perform and/or control or comprise respective means (at least one of 510 to 560) for performing and/or controlling the method according to the second exemplary aspect. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to second exemplary aspect.

Processor 510 may for instance comprise an identifier information and/or received signal strength information resolver 511 as a functional and/or structural unit. Identifier information and/or received signal strength information resolver 511 may for instance resolve one or more pieces of partial identifier information into full identifier information, and/or one or more pieces of signal strength information into dBm values.

Processor 510 may for instance further control the memories 520 to 540, the communication interface(s) 550, and the optional user interface 560.

Processor 510 may for instance execute computer program code stored in program memory 530, which may for instance represent a computer readable storage medium comprising program code that, when executed by processor 510, causes the processor 510 to perform the method according to the second exemplary aspect.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more pieces of sample measurements, one or more pieces of identifier information, one or more pieces of partial identifier information, one or more pieces of received signal strength information, one or more pieces of encoded sample measurements, one or more messages, one or more discreet messages, one or more position requests, one or more pieces of position information, or a combination thereof.

Communication interface(s) 550 enable apparatus 500 to communicate with other entities, e.g. with radio nodes 130-1 to 130-5 of Fig. 1. The communication interface(s) 550 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 500 to communicate with other entities, for instance with one or more of the IoT device 140 of Fig. 1.

User interface 560 is optional and may comprise a display for displaying information to a user and/or an input device (e.g. a keyboard, keypad, touchpad, mouse, etc.) for receiving information from a user.

Some or all of the components of the apparatus 500 may for instance be connected via a bus. Some or all of the components of the apparatus 500 may for instance be combined into one or more modules.

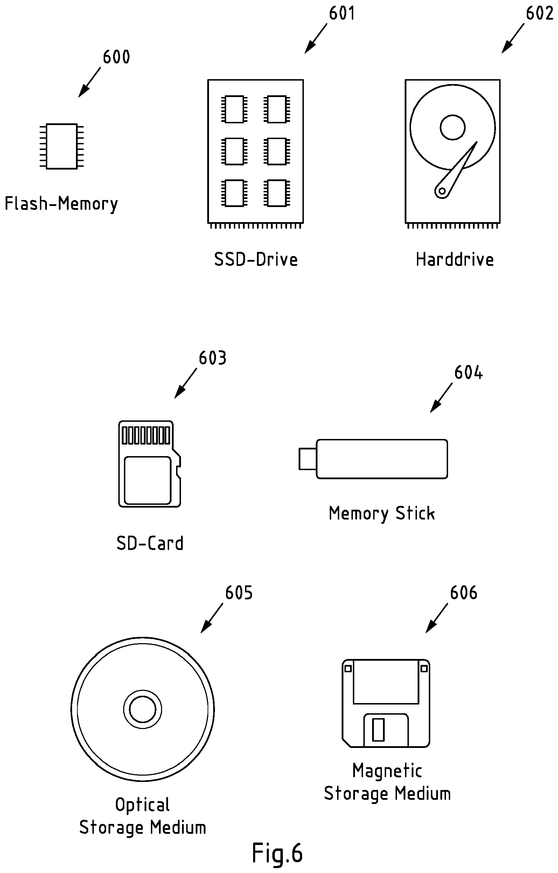

Fig. 6 is a schematic illustration of examples of tangible and non-transitory computer-readable storage media according to the present invention that may for instance be used to implement program and/or main or working or program or data memory 420, 430, 440, 520, 530, 540 of the apparatus 400, and/or 500 of Fig. 4 or Fig. 5. Fig. 6 shows a flash memory 600, which may for instance be soldered or bonded to a printed circuit board, a solid-state drive 601 comprising a plurality of memory chips (e.g. Flash memory chips), a magnetic hard drive 602, a Secure Digital (SD) card 603, a Universal Serial Bus (USB) memory stick 604, an optical storage medium 605 (such as for instance a CD-ROM or DVD) and a magnetic storage medium 606.

The following embodiments shall also be considered to be disclosed:
Embodiment 1: A method comprising:
   - gathering at least one sample measurement comprising at least one of an identifier information or signal strength information of a plurality of radio nodes, wherein one or more signals sent by the respective radio nodes are observable at a location where the apparatus performs the gather of the at least one sample measurement;
   - encoding the at least one sample measurement based on the following conditions:
      - allowing the encoded at least one sample measurement to comprise at a maximum two full identifier information of the respective radio nodes;
      - allowing the encoded at least one sample measurement to comprise at a maximum three partial identifier information, wherein a part of a respective full identifier information of the respective radio nodes is allowed to be comprised; and
      - allowing the encoded at least one sample measurement to comprise at least one signal strength information of the respective radio nodes;
   - providing the encoded at least one sample measurement.
Embodiment 2: The method according to embodiment 1, wherein a respective full identifier information is represented by six octets, and a respective partial identifier information is represented by one octet, and the part of the respective full identifier information is a last octet of the respective obtained identifier information.
Embodiment 3: The method according to embodiment 1 or 2, wherein the at least one signal strength information of the encoded at least one sample measurement is represented by 4 bits.
Embodiment 4: The method according to any of the preceding embodiments, wherein the at least one signal strength information of the encoded at least one sample measurement is converted into a linear value, wherein the conversion is based on at least one of pre-defined signal strength values or pre-defined signal strength ranges of the gathered signal strength information mapped to the respective linear values.
Embodiment 5: The method according to any of the preceding embodiments, wherein the encoded at least one sample measurement is allowed to comprise up to five converted signal strength information.
Embodiment 6: The method according to any of the preceding embodiments, wherein the provided encoded at least one sample measurement is provided in a single message.
Embodiment 7: The method according to any of the preceding embodiments, wherein the encoded at least one sample measurement is provided as two discreet messages.
Embodiment 8: The method according to any of the preceding embodiments, wherein a first discreet message of the two discreet messages comprises one of the maximum of two full identifier information of the respective radio nodes, is allowed to comprise at a maximum the three partial identifier information and is allowed to comprise the respective signal strength information of the respective radio nodes whose identifier information, or a part of it, is comprised by the first discreet message.
Embodiment 9: The method according to any of the preceding embodiments, wherein a second discreet message of the two discreet messages comprises another one of the maximum of two full identifier information of the respective radio nodes, is allowed to comprise at a maximum three further partial identifier information not comprised by the first discreet message, and is allowed to comprise the respective signal strength information of the respective radio nodes whose identifier information, or a part of it, is comprised by the second discreet message.
Embodiment 10: The method according to any of the preceding embodiments, wherein the second discreet message is allowed to comprise a checksum of the first discreet message.
Embodiment 11: The method according to any of the preceding embodiments, further comprising:
   - obtaining a position information determined based, at least in part, on the provided encoded at least one sample measurement.
Embodiment 12: The method according to any of the preceding embodiments, further comprising:
   - providing a position request indicative of the location at which the apparatus gathered the at least one sample measurement to be determined.
Embodiment 13: The method of any of the preceding embodiments, further comprising:
   - obtaining a configuration indicative of a number of messages into which the at least one sample measurement is encoded, wherein the configuration is determined based on an allowed number of messages in a given timeframe,
      wherein the at least one sample measurement is further encoded based on the configuration.
Embodiment 14: A method comprising:
   - obtaining at least one encoded sample measurement comprising:
      - at a maximum two full identifier information of respective radio nodes;
      - at a maximum three partial identifier information of respective radio nodes, wherein a part of a respective full identifier information of the respective radio nodes is comprised; and
      - at least one signal strength information of the respective radio nodes; and
   - resolving a respective partial identifier information of the maximum of three partial identifier information of respective radio nodes to determine their respective full identifier information.
Embodiment 15: The method of embodiment 14, further comprising:
   - determining a position estimate based, at least in part, on the obtained encoded at least one sample measurement; and
   - providing the position estimate.
Embodiment 16: The method according to any of the embodiments 14 or 15, further comprising:
   - obtaining a position request indicative of a location at which an apparatus gathered the obtained at least one sample measurement to be determined.
Embodiment 17: The method according to any of the embodiments 14 to 16, further comprising:
   - combining a first discreet message and a second discreet message in case the at least one encoded sample measurement is obtained as two discreet messages instead of one.
Embodiment 18: The method according to any of the embodiments 14 to 17, wherein the first discreet message and the second discreet message are combined based on a checksum comprised by the second discreet message.
Embodiment 19: The method according to any of the embodiments 14 to 18, further comprising:
   - resolving a respective signal strength information represented by a linear value based on at least one of pre-defined signal strength values or pre-defined signal strength ranges mapped to the respective linear values.
Embodiment 20: The method according to any of the embodiments 14 to 19, wherein the position estimate is determined based on a maximum of five full identifier information of the respective radio nodes with their corresponding signal strength information.
Embodiment 21: The method according to any of the embodiments 14 to 20, wherein the position estimate is determined based on a maximum of eight full identifier information of the respective radio nodes with their corresponding signal strength information.
Embodiment 22: The method according to any of the embodiments 14 to 21, further comprising:
   - determining a configuration indicative of a number of messages into which the at least one sample measurement is encoded, wherein the configuration is determined based on an allowed number of messages in a given timeframe; and
   - providing the configuration.
Embodiment 23: The method according to any of the embodiments 14 to 22, wherein a respective full identifier information is represented by six octets, and a respective partial identifier information is represented by one octet, and the part of the respective full identifier information is a last octet of the respective obtained identifier information.
Embodiment 24: The method according to any of the embodiments 14 to 23, wherein the at least one signal strength information of the encoded at least one sample measurement is represented by 4 bits.
Embodiment 25: The method according to any of the embodiments 14 to 24, wherein the encoded at least one sample measurement is allowed to comprise up to five converted signal strength information.
Embodiment 26: The method according to any of the embodiments 14 to 25, wherein the provided encoded at least one sample measurement is provided in a single message.
Embodiment 27: The method according to any of the embodiments 14 to 26, wherein the encoded at least one sample measurement is provided as two discreet messages.
Embodiment 28: The method according to any of the embodiments 14 to 27, wherein a first discreet message of the two discreet messages comprises one of the maximum of two full identifier information of the respective radio nodes, is allowed to comprise at a maximum the three partial identifier information and is allowed to comprise the respective signal strength information of the respective radio nodes whose identifier information, or a part of it, is comprised by the first discreet message.
Embodiment 29: The method according to any of the embodiments 14 to 28, wherein a second discreet message of the two discreet messages comprises another one of the maximum of two full identifier information of the respective radio nodes, is allowed to comprise at a maximum three further partial identifier information not comprised by the first discreet message, and is allowed to comprise the respective signal strength information of the respective radio nodes whose identifier information, or a part of it, is comprised by the second discreet message.
Embodiment 30: The method according to any of the embodiments 14 to 29, wherein the second discreet message is allowed to comprise a checksum of the first discreet message.
Embodiment 31: An apparatus comprising respective means for performing the method of any of embodiments 1 to 13.
Embodiment 32: An apparatus comprising at least one processor and at least one memory storing instructions that, when executed by the at least one processor, cause an apparatus at least to perform and/or control the method according any of embodiments 1 to 13.
Embodiment 33: An apparatus comprising respective means for performing the method of any of embodiments 14 to 30.
Embodiment 34: An apparatus comprising at least one processor and at least one memory storing instructions that, when executed by the at least one processor, cause an apparatus at least to perform and/or control the method according any of embodiments 14 to 30.
Embodiment 35: A computer program, the computer program when executed by a processor causing an apparatus, e.g. the apparatus according to any of embodiments 31 to 32, to perform and/or control the actions and/or steps of the method of any of embodiments 1 to 13.
Embodiment 36: A computer program product comprising a computer program according to embodiment 35.
Embodiment 37: A computer program, the computer program when executed by a processor causing an apparatus, e.g. the apparatus according to any of embodiments 33 to 34, to perform and/or control the actions and/or steps of the method of any of embodiments 14 to 30.
Embodiment 38: A computer program product comprising a computer program according to embodiment 37.
Embodiment 39: A system, comprising:
   - at least one first apparatus according to embodiment 31 or 32; and
   - at least one second apparatus according to embodiment 33 or 34.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Having the same meaning as the expression "A and/or B", the expression "at least one of A or B" may be used herein. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

## Claims

1. An apparatus comprising means for performing:
- obtaining at least one encoded sample measurement comprising:
- at a maximum two full identifier information of respective radio nodes;
- at a maximum three partial identifier information of respective radio nodes, wherein a part of a respective full identifier information of the respective radio nodes is comprised; and
- at least one signal strength information of the respective radio nodes; and
- resolving a respective partial identifier information of the maximum of three partial identifier information of respective radio nodes to determine their respective full identifier information.

2. The apparatus according to claim 1, wherein the means for performing are further for performing:
- determining a position information based, at least in part, on the obtained encoded at least one sample measurement; and
- providing the position information.

3. The apparatus according to claim 1 or claim 2, wherein the means for performing are further for performing:
- combining a first discreet message and a second discreet message in case the at least one encoded sample measurement is obtained as two discreet messages instead of one.

4. The apparatus according to any of the preceding claims, wherein the means for performing are further for performing:
- resolving a respective signal strength information represented by a linear value based on at least one of pre-defined signal strength values or pre-defined signal strength ranges mapped to the respective linear values.

5. The apparatus according to any of the preceding claims, wherein a position estimate is determined based on a maximum of five full identifier information of the respective radio nodes with their corresponding signal strength information.

6. The apparatus according to any of the preceding claims, wherein a respective full identifier information is represented by six octets, and a respective partial identifier information is represented by one octet, and the part of the respective full identifier information is a last octet of the respective obtained identifier information .

7. The apparatus according to any of the preceding claims, wherein the at least one signal strength information of the encoded at least one sample measurement is represented by 4 bits .

8. A method, comprising:
- obtaining at least one encoded sample measurement comprising:
- at a maximum two full identifier information of respective radio nodes;
- at a maximum three partial identifier information of respective radio nodes, wherein a part of a respective full identifier information of the respective radio nodes is comprised; and
- at least one signal strength information of the respective radio nodes; and
- resolving a respective partial identifier information of the maximum of three partial identifier information of respective radio nodes to determine their respective full identifier information.

9. The method according to claim 8, further comprising:
- determining a position information based, at least in part, on the obtained encoded at least one sample measurement; and
- providing the position information.

10. The method according to claim 8 or claim 9, further comprising:
- combining a first discreet message and a second discreet message in case the at least one encoded sample measurement is obtained as two discreet messages instead of one.

11. The method according to any of the claims 8 to 10, further comprising:
- resolving a respective signal strength information represented by a linear value based on at least one of pre-defined signal strength values or pre-defined signal strength ranges mapped to the respective linear values.

12. The method according to any of the claims 8 to 11, wherein a position estimate is determined based on a maximum of five full identifier information of the respective radio nodes with their corresponding signal strength information.

13. The method according to any of the claims 8 to 12, wherein a respective full identifier information is represented by six octets, and a respective partial identifier information is represented by one octet, and the part of the respective full identifier information is a last octet of the respective obtained identifier information.

14. The method according to any of the claims 8 to 13, wherein the at least one signal strength information of the encoded at least one sample measurement is represented by 4 bits.

15. A computer program, the computer program when executed by a processor causing an apparatus to perform and/or control the actions and/or steps of the method of any of claims 8 to 14.
